# EUROPEAN PATENT APPLICATION

(11) **EP 4 369 254 A1**
(43) Date of publication of application: **15.05.2024**
(21) Application number: 23209406.0
(22) Date of filing: 13.11.2023
(51) Int. Cl.: G06N 3/0464, G06N 3/048, G06N 3/082

(54) **TRAINING FRAMEWORK METHOD WITH NON-LINEAR ENHANCED KERNEL REPARAMETERIZATION**

(30) Priority: 14.11.2022 US 202263383513 P; 10.11.2023 US 202318506145
(71) Applicant: MediaTek Inc., Hsin-Chu 300 (TW)
(72) Inventor: YU, Po-Hsiang, 30078 Hsinchu City (TW); CHEN, Hao, 30078 Hsinchu City (TW); YANG, Cheng-Yu, 30078 Hsinchu City (TW); CHEN, Peng-Wen, 30078 Hsinchu City (TW)
(74) Representative: Haseltine Lake Kempner LLP

(57) **Abstract**

A method for enhancing kernel reparameterization of a non-linear machine learning model includes providing a predefined machine learning model, expanding a kernel of the predefined machine learning model with a non-linear network for convolution operation of the predefined machine learning model to generate the non-linear machine learning model, training the non-linear machine learning model, reparameterizing the non-linear network back to a kernel for convolution operation of the non-linear machine learning model to generate a reparameterized machine learning model, and deploying the reparameterized machine learning model to an edge device.

## Description

This application claims the benefit of U.S. Provisional Application No. 63/383,513, filed on November 14th, 2022. The content of the application is incorporated herein by reference.

### Background

In the field of computer vision, convolution neural network (CNN) has always been one of the most popular architectures. In order to improve the effect of convolution neural network (CNN), one of the commonly used designs in recent years is to use residual path or multi-branch to make the convolution neural network (CNN) model behave like an ensemble model.

Although residual path or multi-branch can improve the performance of convolution neural network (CNN), such architecture may have poor execution efficiency on hardware such as an edge device. RepVGG in 2021 proposed an architecture that has multi-branches during training, but can be reparameterized into a plain model during inference. This method allows the model to improve its performance while still maintaining the computational efficiency of the plain convolution neural network (CNN) model. So far, this method of structural reparameterization has passed the test of time and has been widely used or further improved in many computational optimization models.

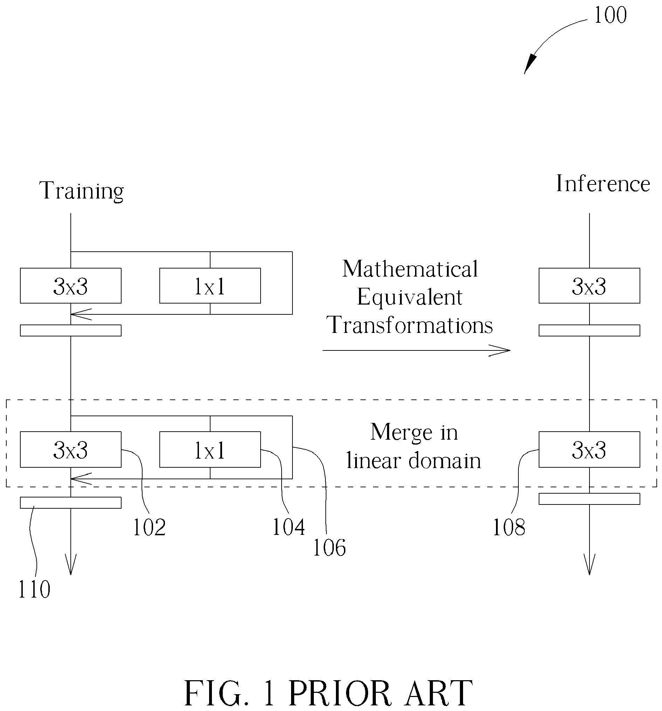

FIG.1 is prior art structural reparameterization performed on a machine learning model 100. The machine learning model 100 is built with a 3x3 convolution layer 102, a 1x1 convolution layer 104, and a residual path 106. To reparameterize the machine learning model 100, the 3x3 convolution layer 102, the 1x1 convolution layer 104 and the residual path 106 are merged into a 3x3 convolution layer 108. In the training stage, the machine learning model 100 with the 3x3 convolution layer 102, the 1x1 convolution layer 104 and the residual path 106 is optimized. In inference stage, the machine learning model 100 is reparameterized by merging the 3x3 convolution layer 102, the 1x1 convolution layer 104 and the residual path 106 into one 3x3 convolution layer 108 and recalculating the parameters. The non-linear part 110 such as a rectified linear unit (ReLU) of the machine learning model 100 cannot be merged due to the limitation of structural reparameterization.

Since the structural reparameterization of the network architecture is limited to linear components for the equivalent transformation, the structural reparameterization would have a performance ceiling. Therefore, a method for enhancing kernel reparameterization of a non-linear machine learning model is desired.

### Summary

A method for enhancing kernel reparameterization of a non-linear machine learning model includes providing a predefined machine learning model, expanding a kernel of the predefined machine learning model with a non-linear network for convolution operation of the predefined machine learning model to generate the non-linear machine learning model, training the non-linear machine learning model, reparameterizing the non-linear network back to a kernel for convolution operation of the non-linear machine learning model to generate a reparameterized machine learning model, and deploying the reparameterized machine learning model to an edge device.

These and other objectives of the present invention will no doubt become obvious to those of ordinary skill in the art after reading the following detailed description of the preferred embodiment that is illustrated in the various figures and drawings.

### Brief Description of the Drawings

FIG.1 is prior art structural reparameterization performed on a machine learning model.
FIG.2 is a non-linear machine learning model with enhanced kernel reparameterization according to an embodiment of the present invention.
FIG.3 is the flowchart of a method for enhancing kernel reparameterization of a non-linear machine learning model according to an embodiment of the present invention.
FIG.4A is an example with non-linear activation layers of the non-linear network according to an embodiment of the present invention.
FIG.4B is an example with a squeeze and excitation network of the non-linear network according to an embodiment of the present invention.
FIG.4C is an example with a self-attention network of the non-linear network according to an embodiment of the present invention.
FIG.4D is an example with a channel attention network of the non-linear network according to an embodiment of the present invention.
FIG.4E is an example with a split attention network of the non-linear network according to an embodiment of the present invention.
FIG.4F is an example with a feed-forward network of the non-linear network according to an embodiment of the present invention.

### Detailed Description

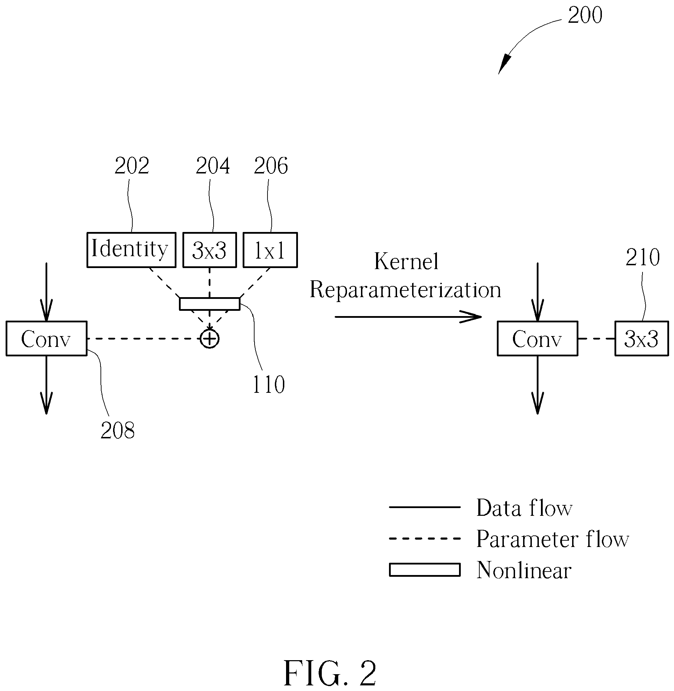

FIG.2 is a non-linear machine learning model 200 with enhanced kernel reparameterization according to an embodiment of the present invention. The non-linear machine learning model 200 includes an identity kernel 202, a 3x3 kernel 204, and a 1x1 kernel 206. The non-linear part 110 as shown in FIG.1 is moved to the kernel before a convolution layer 208. By doing so, the non-linear part 110 can be merged together into a 3x3 kernel 210 because the parameter flow (dashed lines) is independent to the data flow (solid lines).

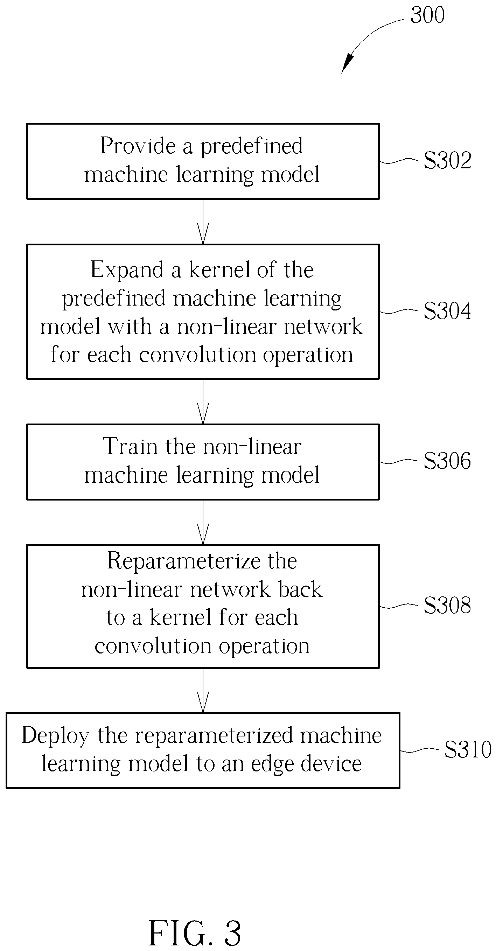

FIG.3 is the flowchart of a method 300 for enhancing kernel reparameterization of the non-linear machine learning model according to an embodiment of the present invention. The method 300 includes follow steps:
Step S302: Provide a predefined machine learning model;
Step S304: Expand a kernel of the predefined machine learning model with a non-linear network for convolution operation of the predefined machine learning model to generate the non-linear machine learning model;
Step S306: Train the non-linear machine learning model;
Step S308: Reparameterize the non-linear network back to a kernel for convolution operation of the non-linear machine learning model to generate a reparameterized machine learning model; and
Step S310: Deploy the reparameterized machine learning model to an edge device.

In step S302, a predefined machine learning model is provided. In step S304, a kernel of the predefined machine learning model with a non-linear network is expanded for convolution operation of the predefined machine learning model to generate the non-linear machine learning model. The non-linear network includes non-linear activation layers, a squeeze and excitation network, a self-attention network, a channel attention network, a split attention network, and/or a feed-forward network. In step S306, the non-linear machine learning model is trained. In step S308, the non-linear network is reparameterized back to a kernel for convolution operation of the non-linear machine learning model to generate a reparameterized machine learning model. In step S310, the reparameterized machine learning model is deployed to an edge device. The edge device can be a mobile device or an embedding system.

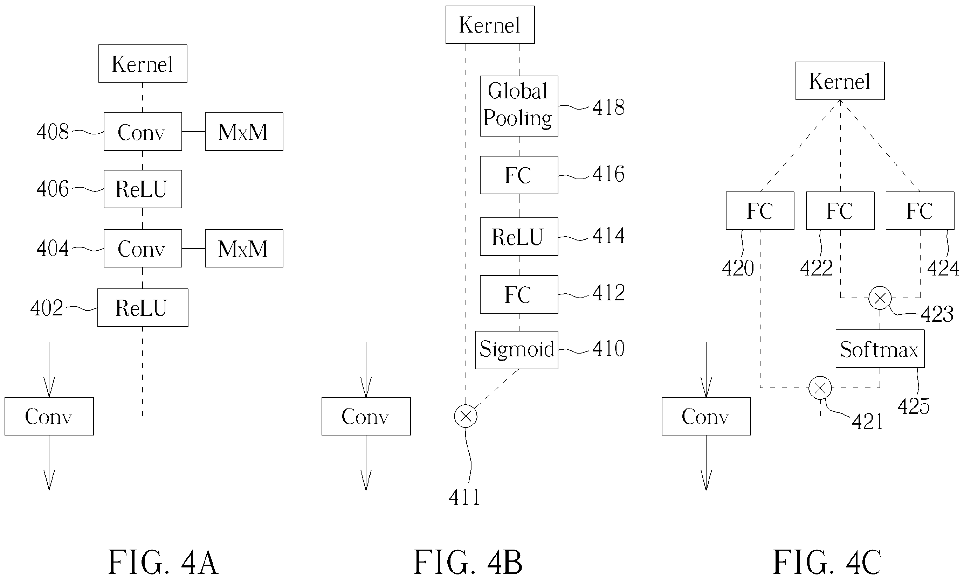

FIG.4A is an example with non-linear activation layers of the non-linear network according to an embodiment of the present invention. The kernel is expanded with two MxM convolution layers 404, 408 and two non-linear activation layers 402, 406 such as ReLU. This non-linear network can be reparameterized into a QxQ convolution layer because the expansion is all performed in the kernel. M and Q are positive integers, and M≤Q.

FIG.4B is an example with a squeeze and excitation network of the non-linear network according to an embodiment of the present invention. The kernel is expanded with two fully connected layers 412, 416, one global pooling layer 418, and two non-linear activation layers 410, 414 such as ReLU and Sigmoid. The kernel and the output of the Sigmoid layer 410 are inputted to a multiply layer 411. This non-linear network can be reparameterized into a QxQ convolution layer because the expansion is all performed in the kernel.

FIG.4C is an example with a self-attention network of the non-linear network according to an embodiment of the present invention. The kernel is expanded with three fully connected layers 420, 422, 424 and one softmax activation layer 425. The outputs of two fully connected layers 422, 424 are inputted to a multiply layer 423 to generate an input to the softmax activation layer 425, and the output of the softmax layer 425 and the output of the other fully connected layer 420 are inputted to another multiply layer 421. This non-linear network can be reparameterized into a QxQ convolution layer because the expansion is all performed in the kernel.

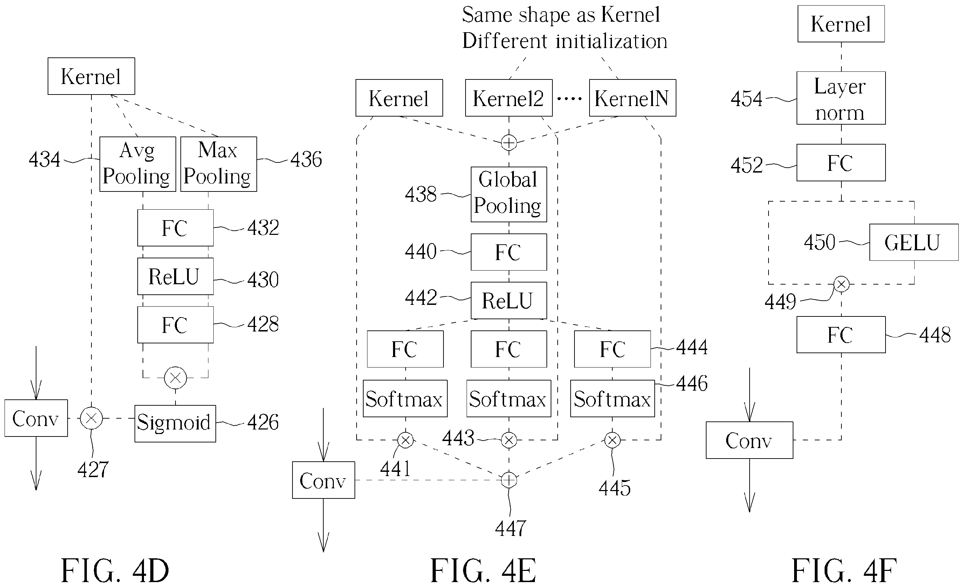

FIG.4D is an example with a channel attention network of the non-linear network according to an embodiment of the present invention. The kernel is expanded with two fully connected layers 428, 432, one average pooling layer 434, one max pooling layer 436 and two non-linear activation layers 426, 430 such as ReLU and Sigmoid. The outputs of the Sigmoid activation layer 426 and the kernel are inputted to a multiply layer 427. This non-linear network can be reparameterized into a QxQ convolution layer because the expansion is all performed in the kernel.

FIG.4E is an example with a split attention network of the non-linear network according to an embodiment of the present invention. The kernel is expanded with N kernels, one global pooling layer 438, (N+1) fully connected layers 440, 444, one ReLU activation layer 442 and N softmax activation layers 446. The outputs of the softmax activation layers 446 and the kernels are inputted to a plurality of multiply layers 441, 443, 445 to input to an add layer 447. This non-linear network can be reparameterized into a QxQ convolution layer because the expansion is all performed in the kernel.

FIG.4F is an example with a feed-forward network of the non-linear network according to an embodiment of the present invention. The kernel is expanded with a norm layer 454, two fully connected layers 448, 452 and one Gaussian error linear unit (GELU) layer 450. The output of the GELU activation layer 450 and the output of the fully connected layer 452 are inputted to a multiply layer 449 to generate the input of the other fully connected layer 448. This non-linear network can be reparameterized into a QxQ convolution layer because the expansion is all performed in the kernel.

The reparameterization of the non-linear machine learning model can be performed for classification, object detection, segmentation, and/or image restoration. Image restoration includes super resolution and noise reduction. The reparameterization of the non-linear machine learning model is trained with the benefits of non-linear networks but inferences in plain convolution neural network model without additional resources. Thus the accuracy of the method of enhanced kernel reparameterization of the non-linear machine learning model is better than the prior art structural reparameterization method.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for enhancing kernel reparameterization of a non-linear machine learning model (200), comprising:
providing (S302) a predefined machine learning model;
expanding (S304) a kernel (202-206) of the predefined machine learning model with a non-linear network (402-454) for convolution operation of the predefined machine learning model to generate the non-linear machine learning model;
training (S306) the non-linear machine learning model (200);
reparameterizing (S308) the non-linear network (402-454) back to a kernel for convolution operation of the non-linear machine learning model to generate a reparameterized machine learning model; and
deploying (S310) the reparameterized machine learning model to an edge device.

2. The method of claim 1, wherein the non-linear network (402-454) comprises non-linear activation layers (402-408), a squeeze and excitation network (410-418), a self-attention network (420-425), a channel attention network (426-436), a split attention network (438-447), and/or a feed-forward network (448-454) .

3. The method of claim 1, wherein deploying (S310) the reparameterized machine learning model to the edge device is deploying the reparameterized machine learning model to the edge device for classification, object detection, segmentation, or image restoration.

4. The method of claim 3, wherein the image restoration comprises super resolution and noise reduction.

5. The method of claim 1, wherein expanding (S304) the kernel (202-206) of the predefined machine learning model with the non-linear network (402-454) for convolution operation of the predefined machine learning model to generate the non-linear machine learning model (200) is expanding a QxQ kernel of the predefined machine learning model with the non-linear network (402-454) for convolution operation of the predefined machine learning model to generate the non-linear machine learning model (200) where Q is a positive integer.

6. The method of claim 1, wherein the edge device is a mobile device.

7. A non-transitory computer readable storage medium containing computer executable instructions, wherein the computer executable instructions, when executed by a computer processor, implement a method for enhancing kernel reparameterization of a non-linear machine learning model (200), wherein the method comprises:
providing (S302) a predefined machine learning model;
expanding (S304) a kernel (202-206) of the predefined machine learning model with a non-linear network (402-454) for convolution operation of the predefined machine learning model to generate the non-linear machine learning model (200);
training (S306) the non-linear machine learning model (200);
reparameterizing (S308) the non-linear network (402-454) back to a kernel for convolution operation of the non-linear machine learning model (200) to generate a reparameterized machine learning model; and
deploying (S310) the reparameterized machine learning model to an edge device.

8. The non-transitory computer readable storage medium of claim 7, wherein the non-linear network (402-454) comprises non-linear activation layers (402-208), a squeeze and excitation network (410-418), a self-attention network (420-425), a channel attention network (426-436), a split attention network (438-447), and/or a feed-forward network (448-454).

9. The non-transitory computer readable storage medium of claim 7, wherein the reparameterized machine learning model is deployed (S310) to the edge device for classification, object detection, segmentation, or image restoration.

10. The non-transitory computer readable storage medium of claim 9, wherein image restoration comprises super resolution and noise reduction.

11. The non-transitory computer readable storage medium of claim 7, wherein the kernel is a QxQ kernel where Q is a positive integer.

12. The non-transitory computer readable storage medium of claim 7, wherein the edge device is a mobile device.
